# EUROPÄISCHE PATENTANMELDUNG

(11) **EP 2 022 677 A2**
(43) Veröffentlichungstag der Anmeldung: **11.02.2009**
(21) Anmeldenummer: 08012367.2
(22) Anmeldetag: 09.07.2008
(51) Int. Cl.: B60R 13/00

(54) **Versenkvorrichtung für ein Kühler-Dekorelement**

(30) Priorität: 08.08.2007 DE 102007037362
(71) Anmelder: SUSPA Holding GmbH, 90518 Altdorf (DE)
(72) Erfinder: Rügenberg, Roland, 55566 Bad Sobernheim (DE); Lang, Johannes, 91352 Hallerndorf (DE); Preis, Johannes, 93077 Bad Abbach/Lengfeld (DE)
(74) Vertreter: Rau, Albrecht

(57) **Zusammenfassung**

Eine Versenkvorrichtung (1) für ein Kühler-Dekorelement (2) weist zur Erzielung eines umfassenden und zuverlässigen Schutzes des Kühler-Dekorelements (2) einen mechanischen Kraftspeicher (6) und eine elektrische Antriebs-Einrichtung (7) auf. Ein mit dem Kühler-Dekorelement (2) verbundenes Versenk-Gestänge (4) ist mittels des mechanischen Kraftspeichers (6) und der elektrischen Antriebs-Einrichtung (7) betätigbar, wobei zum rein mechanischen Betätigen des Versenk-Gestänges (4) der mechanische Kraftspeicher (6) von der elektrischen Antriebs-Einrichtung (7) mittels einer Entkopplungs-Einrichtung (5) entkoppelbar ist. Die Entkopplungs-Einrichtung (5) ist mittels einer Auslöse-Einrichtung (3) betätigbar.

## Beschreibung

Die Erfindung betrifft eine Versenkvorrichtung für ein Kühler-Dekorelement.

Es sind Fahrzeughersteller bekannt, die ihre hochwertigen Fahrzeuge, insbesondere Automobile, mit Kühler-Dekorelementen, beispielsweise Kühler-Figuren, verzieren. Derartige Kühler-Dekorelemente sind frei zugänglich im Bereich oberhalb des Kühlers angeordnet und häufig Ziel von Vandalismus. Zum Schutz eines derartigen Kühler-Dekorelements ist bei manchen Fahrzeugherstellern eine Versenkvorrichtung vorgesehen, mittels der das Kühler-Dekorelement beim Abstellen des Fahrzeugs in den Motorraum versenkbar ist und beim Starten des Fahrzeugs wieder ausfahrbar ist. Nachteilig ist, dass bei den bekannten Versenkvorrichtungen der Schutz des Kühler-Dekorelements immer noch als unzureichend empfunden wird.

Der Erfindung liegt daher die Aufgabe zugrunde, eine Versenkvorrichtung für ein Kühler-Dekorelement derart weiterzubilden, dass dieses umfassend und zuverlässig vor Beschädigungen geschützt wird.

Diese Aufgabe wird durch die Merkmale des Anspruchs 1 gelöst. Der Kern der Erfindung besteht darin, dass zum Versenken des Kühler-Dekorelements einerseits eine elektrische Antriebs-Einrichtung und andererseits ein mechanischer Kraftspeicher vorgesehen sind, die mittels der Entkopplungs-Einrichtung voneinander entkoppelbar sind. In einer ersten elektrischen Betriebsweise der Versenkvorrichtung betätigt die elektrische Antriebs-Einrichtung das Versenk-Gestänge, wobei mittels des Versenk-Gestänges das Kühler-Dekorelement versenkbar ist. Die elektrische Antriebs-Einrichtung und der mechanische Kraftspeicher sind in der ersten Betriebsweise miteinander gekoppelt, so dass der mechanische Kraftspeicher zusammen mit der elektrischen Antriebs-Einrichtung betätigt wird. In einer zweiten rein mechanischen Betriebsweise der Versenkvorrichtung betätigt ausschließlich der mechanische Kraftspeicher das Versenk-Gestänge. In der zweiten Betriebsweise ist der mechanische Kraftspeicher von der elektrischen Antriebs-Einrichtung mittels der Entkopplungs-Einrichtung mechanisch entkoppelt. Während dem rein mechanischen Betätigen des Versenk-Gestänges ist die elektrische Antriebs-Einrichtung somit in Ruhe. Die Entkopplungs-Einrichtung wird mittels der Auslöse-Einrichtung betätigt, die wiederum mit dem Kühler-Dekorelement verbindbar und mittels diesem betätigbar ist. Das Ausfahren des Kühler-Dekorelements erfolgt in beiden Betriebsweisen mittels der elektrischen Antriebs-Einrichtung. Die erfindungsgemäße Versenkvorrichtung ermöglicht somit einerseits ein komfortables elektrisches Versenken des Kühler-Dekorelements, beispielsweise beim Abstellen des Fahrzeugs, mittels der elektrischen Antriebs-Einrichtung und andererseits ein von der elektrischen Antriebs-Einrichtung unabhängiges rein mechanisches Versenken des Kühler-Dekorelements in dringenden Bedarfsfällen, wie beispielsweise im Falle eines drohenden Diebstahls oder in Fällen drohender Beschädigungen durch Vandalismus oder durch einen Unfall.

Weitere vorteilhafte Ausgestaltungen der Erfindung ergeben sich aus den Unteransprüchen.

Weitere Merkmale, Einzelheiten und Vorteile der Erfindung ergeben sich aus der nachfolgenden Beschreibung eines Ausführungsbeispiels anhand der Zeichnung. Es zeigen:
- Fig. 1: eine Vorderansicht einer Versenkvorrichtung für ein Kühler-Dekorelement,
- Fig. 2: eine Draufsicht auf die Versenkvorrichtung gemäß Fig. 1,
- Fig. 3: eine Schnittdarstellung durch eine Auslöse-Einrichtung entlang der Schnittlinie A-A in Fig. 2 in einer Ruhe-Stellung,
- Fig. 4: eine Schnittdarstellung durch eine Entkopplungs-Einrichtung entlang der Schnittlinie B-B in Fig. 1 in einer Kupplungs-Stellung,
- Fig. 5: eine Schnittdarstellung durch die Auslöse-Einrichtung in einer ersten Auslöse-Stellung,
- Fig. 6: eine Schnittdarstellung durch die Auslöse-Einrichtung in einer zweiten Auslöse-Stellung,
- Fig. 7: eine Schnittdarstellung durch die Entkopplungs-Einrichtung in einer Entkopplungs-Stellung,
- Fig. 8: eine Vorderansicht der Versenkvorrichtung in einer teilweise versenkten Stellung gemäß einer ersten Betriebsweise, und
- Fig. 9: eine Vorderansicht der Versenkvorrichtung in einer vollständig versenkten Stellung gemäß einer zweiten Betriebsweise.

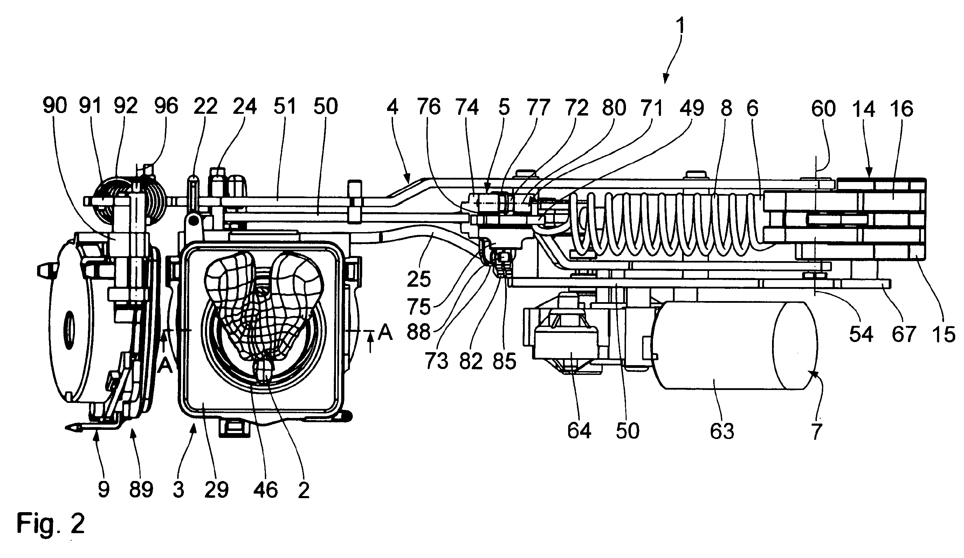

Eine Versenkvorrichtung 1 für ein Kühler-Dekorelement 2 weist eine Auslöse-Einrichtung 3, ein Versenk-Gestänge 4, eine Entkopplungs-Einrichtung 5, einen mechanischen Kraftspeicher 6, eine elektrische Antriebs-Einrichtung 7, ein Entlastungs-Federelement 8, eine Verschluss-Einrichtung 9 und eine Träger-Einrichtung 10 auf. Das Kühler-Dekorelement 2 ist als Kühler-Figur ausgebildet und in einer ausgefahrenen Ruhe-Stellung durch eine Kühler-Öffnung 11 eines Fahrzeuges 12 geführt. Das Kühler-Dekorelement wird nachfolgend als Kühler-Figur 2 bezeichnet.

Die Träger-Einrichtung 10 umfasst ein an dem Fahrzeug 12 befestigbares Träger-Blech 13 und einen an dem Träger-Blech 13 befestigten Lager-Bock 14. Der Lager-Bock 14 weist ein erstes Lager-Bauteil 15 und ein abgewinkeltes zweites Lager-Bauteil 16 auf. Das erste Lager-Bauteil 15 ist mit einem ersten freien Ende an dem Träger-Blech 13 befestigt. Mit einem zweiten freien Ende ist das erste Lager-Bauteil 15 mit einem ersten freien Ende des zweiten Lager-Bauteils 16 verbunden. Das Träger-Blech 13 weist eine im Wesentlichen entlang einer Versenk-Richtung 17 verlaufende Längs-Öffnung 18 auf, die in Form eines Teilkreisbogens verläuft und im montierten Zustand der Versenkvorrichtung 1 im Wesentlichen unterhalb der Kühler-Öffnung 11 angeordnet ist.

Die Auslöse-Einrichtung 3 umfasst ein becherförmiges Gehäuse 19, das an einem Gehäuse-Boden 20 einen im Wesentlichen entlang der Versenk-Richtung 17 verlaufenden Gehäuse-Fortsatz 21 aufweist. Durch den Gehäuse-Fortsatz 21 und die Längs-Öffnung 18 ist ein erster Führungs-Bolzen 22 geführt, so dass die Auslöse-Einrichtung 3 in der Längs-Öffnung 18 festgelegt ist und entlang dieser geführt verlagerbar ist. Der erste Führungs-Bolzen 22 bildet eine Versenk-Schwenkachse 23 aus, so dass die Auslöse-Einrichtung 3 um diese verschwenkbar ist. Die Versenk-Schwenkachse 23 verläuft senkrecht zu der Versenk-Richtung 17.

An dem Gehäuse-Fortsatz 21 ist ein zweiter Führungs-Bolzen 24 befestigt, der beabstandet zu dem ersten Führungs-Bolzen 22 angeordnet ist. Wie nachfolgend noch genauer beschrieben ist, wirken die Führungs-Bolzen 22, 24 mit dem Versenk-Gestänge 4 zusammen.

Die Auslöse-Einrichtung 3 umfasst weiterhin einen in einer Bowdenzug-Hülle 25 geführten Bowdenzug 26, eine Bowdenzug-Buchse 27, ein Stellelement 28, eine Fußplatte 29, ein Fußplatten-Federelement 30, eine Druckplatte 31, einen Haltering 32, erste Auslöse-Federelemente 33, eine Federplatte 34 und zweite Auslöse-Federelemente 35.

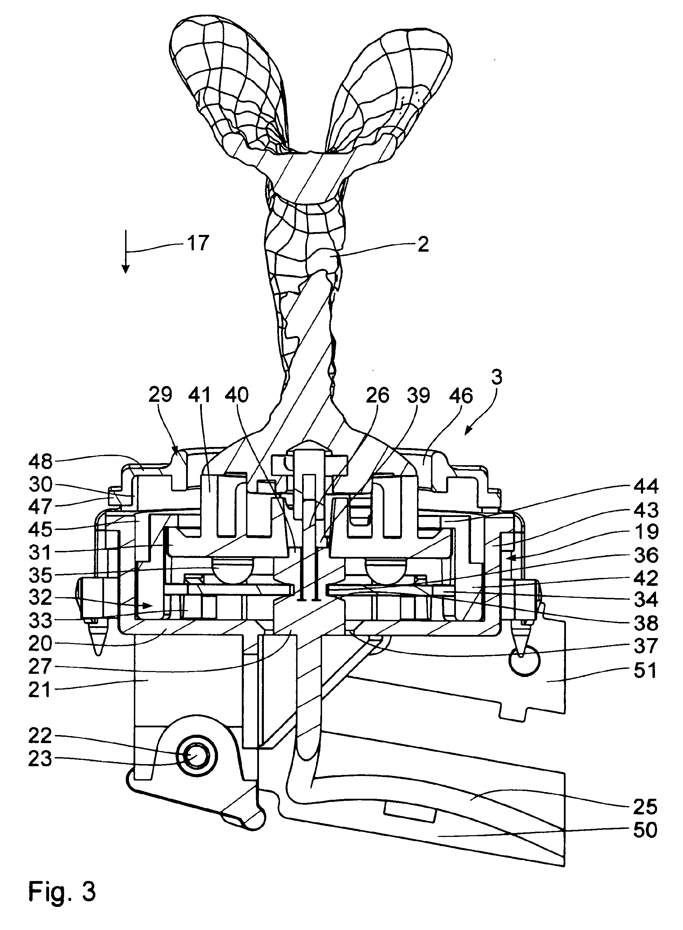

Die ersten Auslöse-Federelemente 33 sind innerhalb des Gehäuses 19 angeordnet und liegen gegen den Gehäuse-Boden 20 an. Die Federplatte 34 ist auf den ersten Auslöse-Federelementen 33 angeordnet. Die Federplatte 34 ist ringförmig ausgebildet und weist mittig eine Federplatten-Öffnung 36 auf. Durch eine im Gehäuse-Boden 20 mittig angeordnete erste Gehäuse-Öffnung 37 ist die Bowdenzug-Buchse 27 in das Gehäuse 19 geführt. Die Bowdenzug-Buchse 27 ist mit einem ersten freien Ende mit der Bowdenzug-Hülle 25 fest verbunden. Die Bowdenzug-Buchse 27 ist zylinderförmig ausgebildet und weist mittig eine umlaufende keilförmige Ringnut 38 auf, in die die Federplatte 34 eingreift, so dass die Bowdenzug-Buchse 27 in der Federplatten-Öffnung 36 schwimmend festgelegt ist. Mittels der Federplatte 34 ist die Bowdenzug-Buchse 27 derart schwimmend gelagert, dass durch eine Druckkraft auf die Bowdenzug-Buchse 27 eine Relativbewegung zwischen der Bowdenzug-Hülle 25 und dem Bowdenzug 26 erzeugbar ist. Die zweiten Auslöse-Federelemente 35 liegen an einer den ersten Auslöse-Federelementen 33 gegenüberliegenden Seite gegen die Federplatte 34 an, wobei die zweiten Auslöse-Federelemente 35 in radialer Richtung einen geringeren Abstand von dem Bowdenzug 26 haben, als die ersten Auslöse-Federelemente 33. Die zweiten Auslöse-Federelemente 35 sind an einer der Federplatte 34 gegenüberliegenden Seite mit der Druckplatte 31 verbunden, die mittig eine Druckplatten-Öffnung 39 aufweist. Die Bowdenzug-Buchse 27 bildet an einer der Bowdenzug-Hülle 25 gegenüberliegenden Seite einen Ringbund 40 aus, gegen den die Druckplatte 31 anliegt, so dass die Bowdenzug-Buchse 27 radial in der Druckplatten-Öffnung 39 festgelegt ist. Die Druckplatte 31 weist an einer den zweiten Auslöse-Federelementen 35 gegenüberliegenden Seite mehrere ringförmige Druckplatten-Fortsätze 41 auf. Die Druckplatten-Fortsätze 41 verlaufen im Wesentlichen entlang der Versenk-Richtung 17 und sind in der Höhe gestuft ausgebildet. Die Druckplatten-Fortsätze 41 dienen als Lager für die Kühler-Figur 2. Zum Sichern der Auslöse-Federelemente 33, 35, der Druckplatte 31 und der Federplatte 34 in dem Gehäuse 19 ist der Haltering 32 vorgesehen. Der Haltering 32 ist im Querschnitt L-förmig ausgebildet, wobei der Haltering 32 mit einem ersten Haltering-Schenkel 42 gegen den Gehäuse-Boden 20 und eine Gehäuse-Seitenwand 43 anliegt und mit einem radial nach innen vorspringenden zweiten Haltering-Schenkel 44 gegen die Druckplatte 31 anliegt. Die Druckplatte 31 ist somit in der in Fig. 3 gezeigten Ruhe-Stellung gegen eine Verschiebung entgegen der Versenk-Richtung 17 relativ zu dem Gehäuse 19 gesichert.

Eine dem Gehäuse-Boden 20 gegenüberliegende zweite Gehäuse-Öffnung 45 ist mittels der Fußplatte 29 verschlossen, wobei die Fußplatte 29 mittig eine Fußplatten-Öffnung 46 aufweist. Durch die Fußplatten-Öffnung 46 sind teilweise die Druckplatten-Fortsätze 41 und die Kühler-Figur 2 geführt. Die Fußplatte 29 weist einen im Querschnitt L-förmigen ersten Fußplatten-Abschnitt 47 und einen im Querschnitt T-förmigen zweiten Fußplatten-Abschnitt 48 auf. Das Fußplatten-Federelement 30 ist ringförmig und im Querschnitt L-förmig ausgebildet und liegt an einer Innenseite gegen den ersten Fußplatten-Abschnitt 47 an. Die Fußplatte 29 ist mit dem ersten Fußplatten-Abschnitt 47 auf der Gehäuse-Seitenwand 43 gelagert, wobei zwischen der Gehäuse-Seitenwand 43 und dem ersten Fußplatten-Abschnitt 47 das Fußplatten-Federelement 30 angeordnet ist. Mittels des Fußplatten-Federelementes 30 ist die Fußplatte 29 somit in allen Richtungen schwimmend gelagert. Der zweite Fußplatten-Abschnitt 48 begrenzt die Fußplatten-Öffnung 46.

Der Bowdenzug 26 ist durch die Bowdenzug-Buchse 27 und die Druckplatten-Öffnung 39 zu der Kühler-Figur 2 geführt und mit dieser auf Zug in die Versenk-Richtung 17 fest verbunden. Mittels der Auslöse-Federelemente 33, 35, der Federplatte 34 und der Druckplatte 31 ist die Kühler-Figur 2 schwimmend gelagert. Die Bowdenzug-Hülle 25 und der Bowdenzug 26 sind von der Auslöse-Einrichtung 3 zu der Entkopplungs-Einrichtung 5 geführt. An einem zweiten freien Ende ist die Bowdenzug-Hülle 25 mit dem Stellelement 28 fest verbunden. Wie nachfolgend noch genauer beschrieben ist, sind der Bowdenzug 26 und das Stellelement 28 mit der Entkopplungs-Einrichtung 5 verbunden, so dass diese mittels der Auslöse-Einrichtung 3 betätigbar ist.

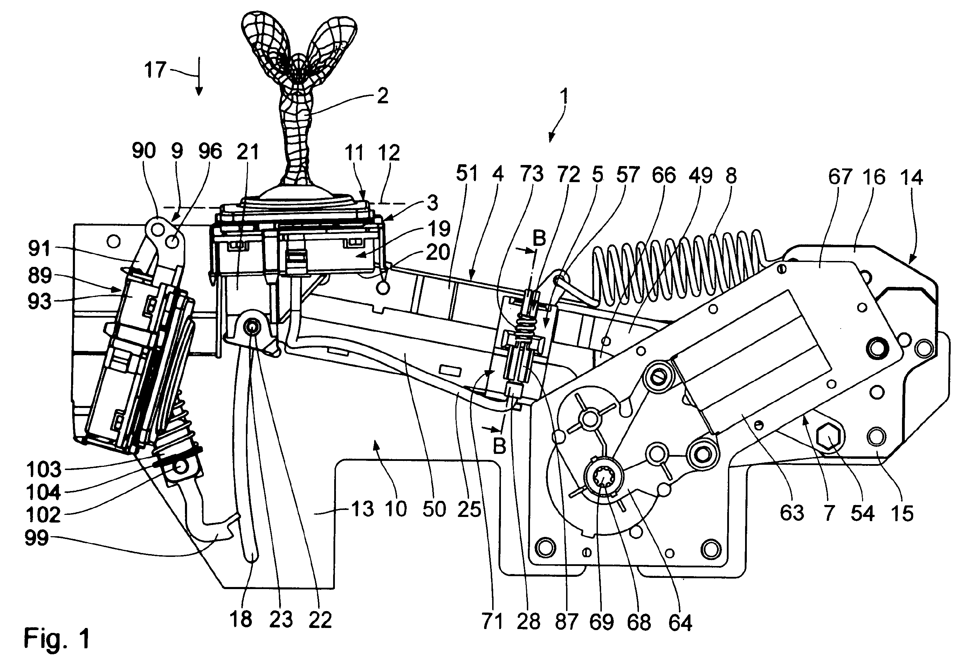

Das Versenk-Gestänge 4 umfasst einen Halte-Hebel 49, einen Versenk-Hebel 50 und einen Führungs-Hebel 51. Ein erstes freies Ende 52 des Halte-Hebels 49 und ein entsprechendes erstes freies Ende 53 des Versenk-Hebels 50 sind um eine gemeinsame erste Gestänge-Schwenkachse 54 schwenkbar im Bereich des ersten freien Endes des ersten Lager-Bauteils 15 gelagert. Die erste Gestänge-Schwenkachse 54 verläuft parallel zu der Versenk-Schwenkachse 23. Ein zweites freies Ende 55 des Halte-Hebels 49 weist eine rechteckig ausgebildete Halte-Öffnung 56 auf. Im Bereich des zweiten freien Endes 55 ist an den Halte-Hebel 49 eine Halte-Nase 57 angeformt, die im Wesentlichen quer zu dem Halte-Hebel 49 verläuft. An der Halte-Nase 57 und dem zweiten freien Ende des zweiten Lager-Bauteils 16 ist das Entlastungs-Federelement 8 befestigt. Das Entlastungs-Federelement 8 ist in der in Fig. 1 gezeigten Ruhe-Stellung auf Zug vorgespannt. Das Entlastungs-Federelement 8 ist als Schraubenfeder ausgebildet.

Der Versenk-Hebel 50 ist S-förmig geschwungen ausgebildet. Im Bereich eines zweiten freien Endes 58 des Versenk-Hebels 50 ist der erste Führungs-Bolzen 22 durch den Versenk-Hebel 50 geführt, so dass die Auslöse-Einrichtung 3 um die Versenk-Schwenkachse 23 verschwenkbar an dem zweiten freien Ende 58 des Versenk-Hebels 50 befestigt ist.

Der Führungs-Hebel 51 ist mit einem ersten freien Ende 59 um eine zweite Gestänge-Schwenkachse 60 schwenkbar und mittig an dem ersten Lager-Bauteil 15 gelagert. Die zweite Gestänge-Schwenkachse 60 verläuft parallel zu der ersten Gestänge-Schwenkachse 54 und ist entlang der Versenk-Richtung 17 beabstandet zu dieser. An einem zweiten freien Ende 61 weist der Führungs-Hebel 51 ein Führungs-Langloch 62 auf, das entlang des Führungs-Hebels 51 verläuft. Durch das Führungs-Langloch 62 ist der zweite Führungs-Bolzen 24 der Auslöse-Einrichtung 3 geführt, so dass diese um die Versenk-Schwenkachse 23 geführt verschwenkbar ist. Mittels des Versenk-Gestänges 4 ist die Auslöse-Einrichtung 3 und die damit verbundene Kühler-Figur 2 sowohl versenkbar als auch verschwenkbar.

Zum rein mechanischen Betätigen des Versenk-Gestänges 4 ist der mechanische Kraftspeicher 6 vorgesehen. Der mechanische Kraftspeicher 6 ist mittig an dem zweiten Lager-Bauteil 16 und mittig an dem Versenk-Hebel 50 schwenkbar befestigt. Der mechanische Kraftspeicher 6 ist in der in Fig. 1 gezeigten Ruhe-Stellung auf Druck vorgespannt. Der mechanische Kraftspeicher 6 ist als Kolben-Zylinder-Einheit, insbesondere als Gasfeder, ausgebildet.

Zum elektrischen Betätigen des Versenk-Gestänges 4 ist die elektrische Antriebs-Einrichtung 7 vorgesehen. Die Antriebs-Einrichtung 7 umfasst einen Antriebs-Motor 63, eine nicht dargestellte Antriebs-Steuerung mit einem Positions-Sensor, ein Getriebe 64, einen Antriebs-Hebel 65, einen Kopplungs-Hebel 66 und eine Antriebs-Trägerplatte 67. Die Antriebs-Trägerplatte 67 ist mit dem Träger-Blech 13 verbunden, wobei der Antriebs-Motor 63 und das Getriebe 64 auf der Antriebs-Trägerplatte 67 befestigt sind. Durch die Antriebs-Trägerplatte 67 ist ein Antriebs-Ritzel 68 des Antriebs-Hebels 65 geführt, das in Eingriff mit dem Getriebe 64 steht. Das Antriebs-Ritzel 68 und der damit verbundene Antriebs-Hebel 65 sind somit um eine erste Antriebs-Drehachse 69 drehantreibbar. Der Antriebs-Hebel 65 ist an einem dem Antriebs-Ritzel 68 gegenüberliegenden freien Ende drehbar mit einem ersten freien Ende des Kopplungs-Hebels 66 verbunden. Der Antriebs-Hebel 65 und der Kopplungs-Hebel 66 sind somit um eine zweite Antriebs-Drehachse 70 drehbar miteinander verbunden. Nahe des zweiten freien Endes 55 des Halte-Hebels 49 ist der Kopplungs-Hebel 66 mit einem zweiten freien Ende mit dem Halte-Hebel 49 schwenkbar verbunden. Eine Drehbewegung des Antriebs-Hebels 65 wird mittels des Kopplungs-Hebels 66 in eine Schwenkbewegung des Halte-Hebels 49 transformiert.

Der Antriebs-Motor 63 ist beispielsweise als Gleichstrom-Motor ausgebildet und mittels des Positions-Sensors und der Antriebs-Steuerung positionsgeregelt.

Zum Entkoppeln des mechanischen Kraftspeichers 6 von der elektrischen Antriebs-Einrichtung 7 ist die Entkopplungs-Einrichtung 5 vorgesehen. Mittels der Entkopplungs-Einrichtung 5 ist der mechanische Kraftspeicher 6 derart von der elektrischen Antriebs-Einrichtung 7 entkoppelbar, dass das Versenk-Gestänge 4 rein mechanisch betätigbar ist. Die Entkopplungs-Einrichtung 5 ist zwischen dem Halte-Hebel 49 und dem Versenk-Hebel 50 wirkend angeordnet. Die Entkopplungs-Einrichtung 5 ist derart ausgebildet, dass der Halte-Hebel 49 mit dem Versenk-Hebel 50 beim elektrischen Betätigen des Versenk-Gestänges 4 koppelbar ist und der Halte-Hebel 49 von dem Versenk-Hebel 50 beim rein mechanischen Betätigen des Versenk-Gestänges 4 entkoppelbar ist.

Die Entkopplungs-Einrichtung 5 umfasst ein Entkopplungs-Gehäuse 71, einen Haken 72 und ein Entkopplungs-Federelement 73. Das Entkopplungs-Gehäuse 71 ist zwischen dem zweiten freien Ende 58 des Versenk-Hebels 50 und dem Kraftspeicher 6 nahe diesem an dem Versenk-Hebel 50 befestigt. Das Entkopplungs-Gehäuse 71 erstreckt sich ausgehend von dem Versenk-Hebel 50 im Wesentlichen quer zu diesem in Richtung des Halte-Hebels 49. Das Entkopplungs-Gehäuse 71 ist im Querschnitt U-förmig ausgebildet und weist einen ersten Gehäuse-Schenkel 74 und einen parallel zu diesem verlaufenden zweiten Gehäuse-Schenkel 75 auf. Die Gehäuse-Schenkel 74, 75 begrenzen eine Aufnahme-Nut 76 zur Aufnahme des zweiten freien Endes 55 des Halte-Hebels 49. Der erste Gehäuse-Schenkel 74 weist mittig eine quer zu der Aufnahme-Nut 76 verlaufende Lagerungs-Nut 77 zur schwenkbaren Lagerung des Hakens 72 auf. Der Haken 72 ist mit einem hohlzylinderförmigen Lagerungs-Abschnitt 78 mittels eines Lagerungs-Bolzens 79 um eine Haken-Schwenkachse 80 verschwenkbar in der Lagerungs-Nut 77 angeordnet. Die Haken-Schwenkachse 80 verläuft im Wesentlichen quer zu der Versenk-Richtung 17 und den Gestänge-Schwenkachsen 54, 60.

Der Haken 72 ist derart ausgebildet, dass dieser in einer Kopplungs-Stellung in die Halte-Öffnung 56 des Halte-Hebels 49 eingreift und mittels des Bowdenzuges 26 um die Haken-Schwenkachse 80 verschwenkbar ist. An den Lagerungs-Abschnitt 78 des Hakens 72 ist ein U-förmiger Kopplungs-Abschnitt 81 und an diesen ein T-förmiger Betätigungs-Abschnitt 82 angeformt. Der Kopplungs-Abschnitt 81 begrenzt seitlich einen Kopplungs-Raum 83, der von der Aufnahme-Nut 76 durchsetzt wird. An einem dem Lagerungs-Abschnitt 78 zugewandten Schenkel des Kopplungs-Abschnitts 81 ist ein rampenförmig ausgebildeter Kopplungs-Vorsprung 84 angeformt, der in den Kopplungs-Raum 83 bis etwa zur Mitte der Aufnahme-Nut 56 ragt. Der Betätigungs-Abschnitt 82 ist an einem dem Lagerungs-Abschnitt 78 abgewandten Schenkel des Kopplungs-Abschnitts 81 angeformt. Der Betätigungs-Abschnitt 82 weist mittig einen Schlitz 85 zur Aufnahme des Bowdenzuges 26 auf. In einem dem Kopplungs-Abschnitt 81 zugewandten Bereich bildet der Betätigungs-Abschnitt 82 eine Lagerungs-Vertiefung 86 aus.

Im Bereich der Lagerungs-Vertiefung 86 weist das Entkopplungs-Gehäuse 71 auf Höhe des Versenk-Hebels 50 einen hohlzylinderförmigen Befestigungs-Abschnitt 87 auf. Der Bowdenzug 26 ist von der der Lagerungs-Vertiefung 86 abgewandten Seite durch den Befestigungs-Abschnitt 87 geführt, wobei das mit der Bowdenzug-Hülle 25 verbundene Stellelement 28 mit dem Befestigungs-Abschnitt 87 verschraubt ist. Mittels des Stellelements 28 kann der Abstand der Bowdenzug-Hülle 25 von dem Befestigungs-Abschnitt 87 eingestellt werden, so dass ein Auslöseweg der Entkopplungs-Einrichtung 5 einstellbar ist. Der Bowdenzug 26 weist an seinem dem Betätigungs-Abschnitt 87 zugewandten Ende eine Abschluss-Kugel 88 auf, wobei der Bowdenzug 26 durch den Schlitz 85 geführt ist, so dass die Abschluss-Kugel 88 in der Lagerungs-Vertiefung 86 zu liegen kommt. Zwischen dem Befestigungs-Abschnitt 87 und der Lagerungs-Vertiefung 86 des Hakens 72 ist das auf Druck vorgespannte Entkopplungs-Federelement 73 angeordnet. Das Entkopplungs-Federelement 73 ist somit zwischen dem Haken 72 und der Bowdenzug-Hülle 25 angeordnet, so dass der Bowdenzug 26 auf Zug und der Haken 72 in der Kopplungs-Stellung gehalten ist. Das Entkopplungs-Federelement 73 ist als Schraubenfeder ausgebildet, wobei der Bowdenzug 26 durch diese geführt ist.

Zum Verschließen der Kühler-Öffnung 11 bei versenkter Kühler-Figur 2 ist die Verschluss-Einrichtung 9 vorgesehen. Die Verschluss-Einrichtung 9 weist einen Verschluss-Deckel 89, einen ersten Verschluss-Hebel 90, einen zweiten Verschluss-Hebel 91 und ein Verschluss-Federelement 92 auf. Der Verschluss-Deckel 89 umfasst ein Deckel-Gehäuse 93 und eine Deckel-Fußplatte 94. Das Deckel-Gehäuse 93 ist im Wesentlichen entsprechend dem Gehäuse 19 aufgebaut, wobei das Deckel-Gehäuse 93 keinen Gehäuse-Fortsatz 21 aufweist. Die Deckel-Fußplatte 94 ist im Wesentlichen entsprechend der Fußplatte 29 ausgebildet, wobei die Deckel-Fußplatte 94 geschlossen ausgebildet ist und keine Fußplatten-Öffnung 36 aufweist. Die Deckel-Fußplatte 94 ist entsprechend zu der Fußplatte 29 in allen Richtungen schwimmend gelagert und mit dem Deckel-Gehäuse 93 verbunden.

An einer dem Versenk-Gestänge 4 abgewandten Seite des Verschluss-Deckels 89 ist seitlich an das Deckel-Gehäuse 93 der erste Verschluss-Hebel 90 mit einem ersten freien Ende 95 angeformt. Der erste Verschluss-Hebel 90 ist ungefähr mittig um eine Verschluss-Schwenkachse 96 verschwenkbar an dem Träger-Blech 13 angeordnet. Der Verschluss-Deckel 89 ist somit um die Verschluss-Schwenkachse 96 verschwenkbar. An einem zweiten freien Ende 97 des ersten Verschluss-Hebels 90 ist der zweite Verschluss-Hebel 91 mit einem ersten freien Ende 98 schwenkbar befestigt. Der zweite Verschluss-Hebel 91 weist zwischen dem ersten freien Ende 98 und einem zweiten freien Ende 99 einen Führungs-Abschnitt 100 auf. In dem Führungs-Abschnitt 100 ist ein Verschluss-Hebel-Langloch 101 ausgebildet. Das Verschluss-Hebel-Langloch 101 ist von einem Führungs-Stift 102 durchsetzt, der ortsfest an dem Träger-Blech 13 befestigt ist. An dem Führungs-Stift 102 ist schwenkbar ein Gleitelement 103 befestigt, das einen ersten Anschlag-Bund 104 ausbildet. An einem dem ersten freien Ende 98 zugewandten Ende des Führungs-Abschnitts 100 ist weiterhin ein zweiter ringförmiger Anschlag-Bund 105 ausgebildet. Zwischen dem ersten Anschlag-Bund 104 und dem zweiten Anschlag-Bund 105 ist das Verschluss-Federelement 92 angeordnet. Das Verschluss-Federelement 92 ist auf Druck vorgespannt. Das Verschluss-Federelement 92 ist als Schraubenfeder ausgebildet und umgibt den Führungs-Abschnitt 100.

Das zweite freie Ende 99 des zweiten Verschluss-Hebels 91 ist hakenförmig ausgebildet und im Wesentlichen rechtwinklig abgewinkelt. Das zweite freie Ende 99 erstreckt sich bis in den Bereich der Längs-Öffnung 18, so dass der zweite Verschluss-Hebel 91 mittels der Auslöse-Einrichtung 3 betätigbar ist. Weiterhin ist das zweite freie Ende 99 des zweiten Verschluss-Hebels 91 und der Gehäuse-Fortsatz 21 derart ausgebildet, dass mittels des zweiten Verschluss-Hebels 91 die Auslöse-Einrichtung 3 um die Versenk-Schwenkachse 23 verschwenkbar ist.

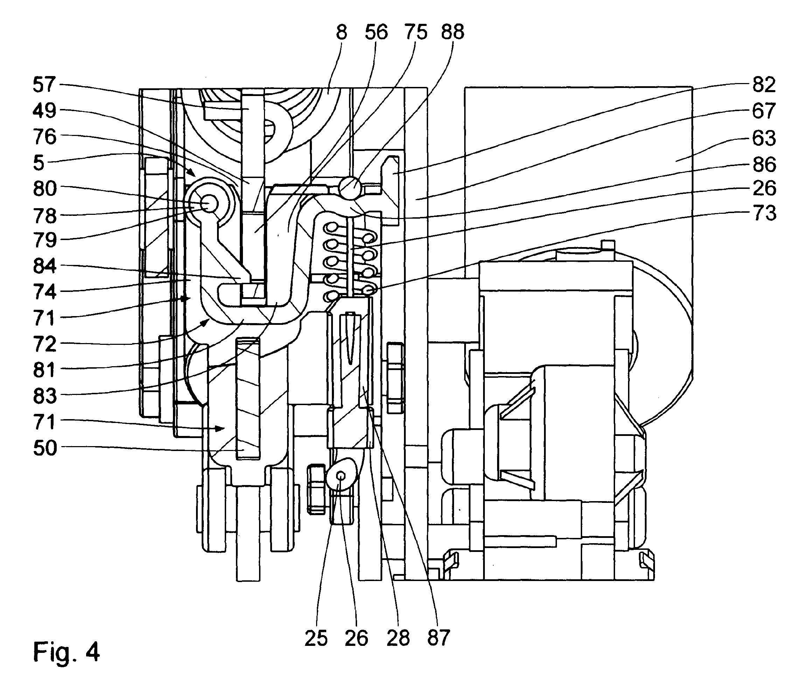

Nachfolgend wird die Funktionsweise der Versenkvorrichtung 1 beschrieben. Die Fig. 1 bis 4 zeigen eine ausgefahrene Ruhe-Stellung der Versenk-vorrichtung 1, in der die Kühler-Figur 2 vollständig ausgefahren ist. Die Auslöse-Einrichtung 3 ist in der in Fig. 3 gezeigten Ruhe-Stellung, so dass die Entkopplungs-Einrichtung 5 in der in Fig. 4 gezeigten Kopplungs-Stellung ist. In der Kopplungs-Stellung sind der Halte-Hebel 49 und der Versenk-Hebel 50 mittels der Entkopplungs-Einrichtung 5 miteinander gekoppelt. Der Halte-Hebel 49 befindet sich mit seinem zweiten freien Ende 55 in der Aufnahme-Nut 76, wobei der Kopplungs-Vorsprung 84 in die Halte-Öffnung 56 eingreift. Das auf Zug vorgespannte Entkopplungs-Federelement 73 hält den Haken 72 in einer gekoppelten ersten Haken-Schwenk-Stellung, wie dies in Fig. 4 gezeigt ist. Der Bowdenzug 26 wird durch das Entkopplungs-Federelement 73 entgegen eine Auslöse-Richtung 106 auf Zug gespannt. Der Kraftspeicher 6 ist auf Druck vorgespannt, wohingegen das Entlastungs-Federelement 8 auf Zug vorgespannt ist. Die Verschluss-Vorrichtung 9 ist in einer eingeklappten Ruhe-Stellung, in der der Verschluss-Deckel 89 eingeklappt und versenkt ist. Das Verschluss-Federelement 92 ist auf Zug vorgespannt, so dass das zweite freie Ende 99 des zweiten Verschluss-Hebels 91 im Bereich der Längs-Öffnung 18 gehalten wird.

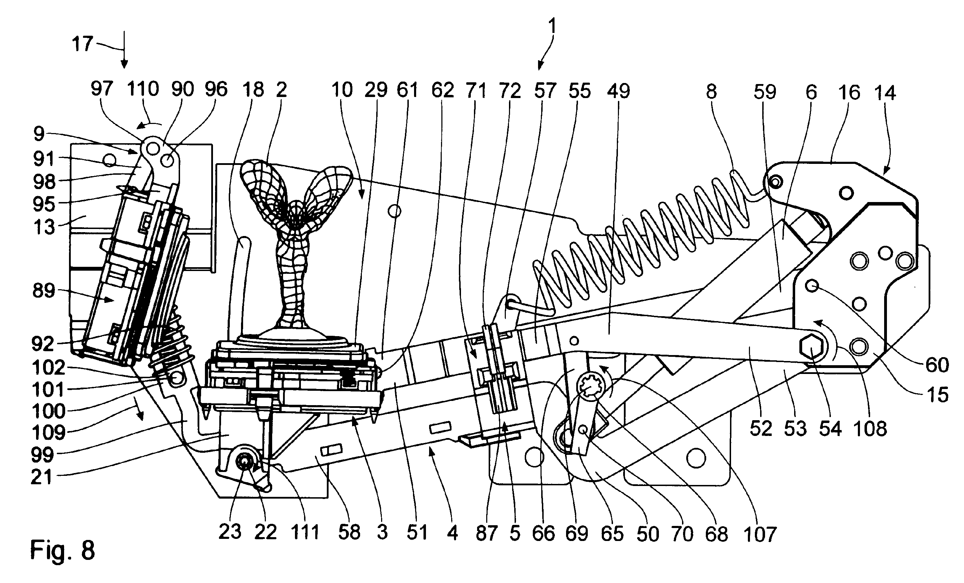

In einer ersten Betriebsweise wird die Versenkvorrichtung 1 mittels der elektrischen Antriebs-Einrichtung 7 betätigt. Der Antriebs-Motor 63 treibt das Antriebs-Ritzel 68 in einer Versenk-Drehrichtung 107 an, wobei der Antriebs-Hebel 65 in der Versenk-Drehrichtung 107 um die erste Antriebs-Drehachse 69 gedreht wird. Das Antriebsmoment des Antriebs-Motors 63 wird über den Antriebs-Hebel 65 auf den Kopplungs-Hebel 66 übertragen, wobei die Drehbewegung des Antriebs-Hebels 65 mittels des Kopplungs-Hebels 66 in eine Schwenkbewegung des Versenk-Gestänges 4 gewandelt wird. Der von dem Kopplungs-Hebel 66 betätigte Halte-Hebel 49 wird in einer Versenk-Schwenkrichtung 108 um die erste Gestänge-Schwenkachse 54 verschwenkt. Dadurch, dass der Halte-Hebel 49 und der Versenk-Hebel 50 in der beschriebenen Weise mittels der Entkopplungs-Einrichtung 5 gekoppelt sind, wird auch der Versenk-Hebel 50 in entsprechender Weise um die erste Gestänge-Schwenkachse 54 verschwenkt. Die Auslöse-Einrichtung 3 und die damit verbundene Kühler-Figur 2 werden durch das Verschwenken des Versenk-Hebels 50 entlang der Längs-Öffnung 18 geführt in Versenk-Richtung 17 verlagert. Durch das Verlagern der Auslöse-Einrichtung 3 wird der Führungs-Hebel 51 mitgenommen und um die zweite Gestänge-Schwenkachse 60 verschwenkt. Der mechanische Kraftspeicher 6 unterstützt das Verschwenken und wird entspannt, wohingegen das Entlastungs-Federelement 8 beim Verschwenken weiter auf Zug gespannt wird. Fig. 8 zeigt die Versenkvorrichtung 1 in der ersten Betriebsweise in einer teilweise versenkten Stellung.

Beim Versenken trifft der Gehäuse-Fortsatz 21 auf das zweite freie Ende 99 des zweiten Verschluss-Hebels 91 und betätigt somit die Verschluss-Einrichtung 9. Der zweite Verschluss-Hebel 91 wird beim Versenken zunehmend in eine Betätigungs-Richtung 109 verlagert, wobei der Führungs-Stift 102 in dem Verschluss-Hebel-Langloch 101 geführt ist und das Verschluss-Federelement 92 zunehmend auf Druck gespannt wird. Durch das Verlagern des zweiten Verschluss-Hebels 91 in Betätigungs-Richtung 109 wird der erste Verschluss-Hebel 90 und der daran angeformte Verschluss-Deckel 89 in einer Deckel-Schwenkrichtung 110 um die Verschluss-Schwenkachse 96 verschwenkt bis der Verschluss-Deckel 89 mit der Deckel-Fußplatte 94 die Kühler-Öffnung 11 verschließt.

Wenn der Gehäuse-Fortsatz 21 beim Versenken der Kühler-Figur 2 auf das zweite freie Ende 99 des zweiten Verschluss-Hebels 91 trifft, so wirkt das zweite freie Ende 99 derart mit dem Gehäuse-Fortsatz 21 zusammen, dass eine Verschwenkbewegung der Auslöse-Einrichtung 3 um die Versenk-Schwenkachse 23 initiiert wird. Mit zunehmendem Versenken der Kühler- Figur 2 wird die Auslöse-Einrichtung 3 und die damit verbundene Kühler- Figur 2 somit verschwenkt, wobei der zweite Führungs-Bolzen 24 in dem Führungs-Langloch 62 des Führungs-Hebels 51 geführt wird. Die Auslöse-Einrichtung 3 wird in einer Gehäuse-Schwenkrichtung 111 verschwenkt, so dass der Verschluss-Deckel 89 beim Verschließen der Kühler-Öffnung 11 nicht mit der Auslöse-Einrichtung 3 kollidiert. Ferner wird durch das Verschwenken der Auslöse-Einrichtung 3 und der damit verbundenen Kühler- Figur 2 eine reduzierte Bauhöhe der Versenkvorrichtung 1 erzielt.

Zum Ausfahren der Kühler-Figur 2 wird das Antriebs-Ritzel 68 mittels des Antriebs-Motors 63 entgegen die Versenk-Drehrichtung 107 angetrieben. Mittels des Versenk-Gestänges 4 wird die Auslöse-Einrichtung 3 entgegen die Versenk-Richtung 17 verlagert und entgegen die Gehäuse-Schwenkrichtung 111 verschwenkt. Der Versenk-Hebel 50 und der Halte-Hebel 49 sind in der beschriebenen Weise mittels der Entkopplungs-Einrichtung 5 miteinander gekoppelt, so dass das auf Zug gespannte Entlastungs-Federelement 8 den Antriebs-Motor 63 beim Ausfahren der Kühler- Figur 2 unterstützt. Der im Wesentlichen entlastete Kraftspeicher 6 muss beim Ausfahren der Kühler-Figur 2 auf Druck gespannt werden. Das Entlastungs-Federelement 8 entlastet den Antriebs-Motor 63 und bewirkt eine elektrische Leistungsaufnahme, die im Vergleich zu der Leistungsaufnahme ohne das Entlastungs-Federelement 8 reduziert ist. Durch das Verlagern der Auslöse-Einrichtung 3 entgegen die Versenk-Richtung 17 wird diese von dem zweiten freien Ende 99 des zweiten Verschluss-Hebels 91 abgehoben, wobei das auf Druck gespannte Verschluss-Federelement 92 den zweiten Verschluss-Hebel 91 entgegen die Betätigungs-Richtung 109 verlagert. Durch das Verlagern des zweiten Verschluss-Hebels 91 wird der Verschluss-Deckel 89 entgegen die Deckel-Schwenkrichtung 110 um die Verschluss-Schwenkachse 96 verschwenkt, so dass der Verschluss-Deckel 89 die Kühler-Öffnung 11 freigibt. Das Ausfahren der Kühler-Figur 2 erfolgt ansonsten in entsprechender Weise zu dem Versenken der Kühler- Figur 2.

In einer zweiten Betriebsweise der Versenk-Vorrichtung 1 erfolgt das Versenken der Kühler-Figur 2 rein mechanisch. Diese Betriebsweise wird durch eine Zugkraft oder eine Druckkraft auf die Kühler-Figur 2 ausgelöst, wie dies beispielsweise bei einem drohenden Diebstahl oder einer drohenden Beschädigung der Kühler-Figur 2 durch Vandalismus oder durch einen Unfall erfolgt.

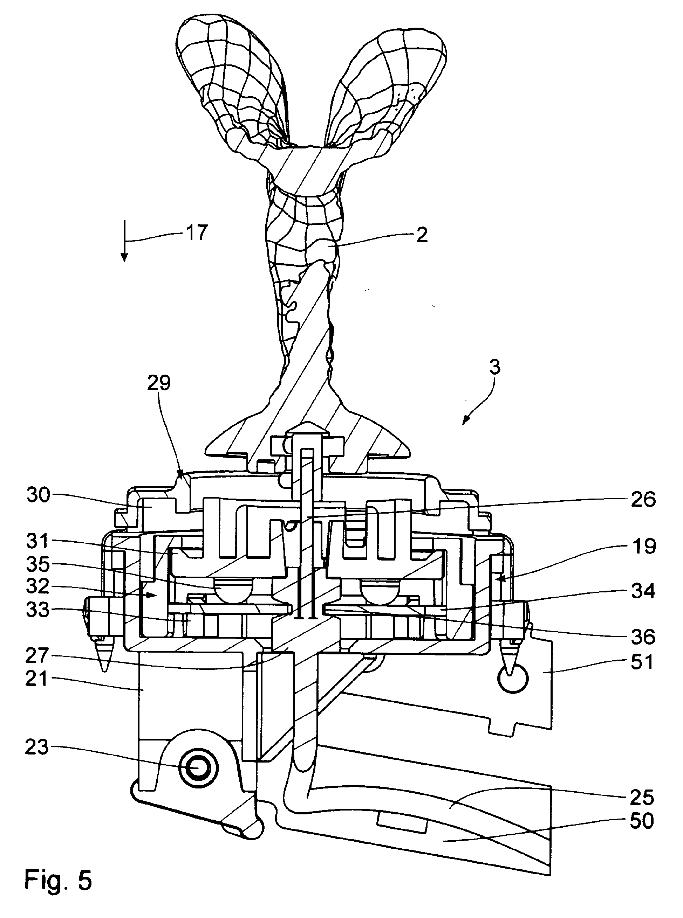

Fig. 5 zeigt die Auslöse-Einrichtung 3 in einer ersten Auslöse-Stellung, wenn die Kühler-Figur 2 relativ zu der Auslöse-Einrichtung 3 entgegen die Versenk-Richtung 17 aus ihrer Ruhe-Stellung verlagert ist. Dadurch, dass der Bowdenzug 26 mit der Kühler-Figur 2 auf Zug fest verbunden ist, wird der Bowdenzug 26 mit der Kühler-Figur 2 entgegen die Versenk-Richtung 17 gezogen, wobei sich der Bowdenzug 26 relativ zu der Bowdenzug-Hülle 25 verlagert. Der Bowdenzug 26 überträgt somit eine Zugkraft auf die Entkopplungs-Einrichtung 5.

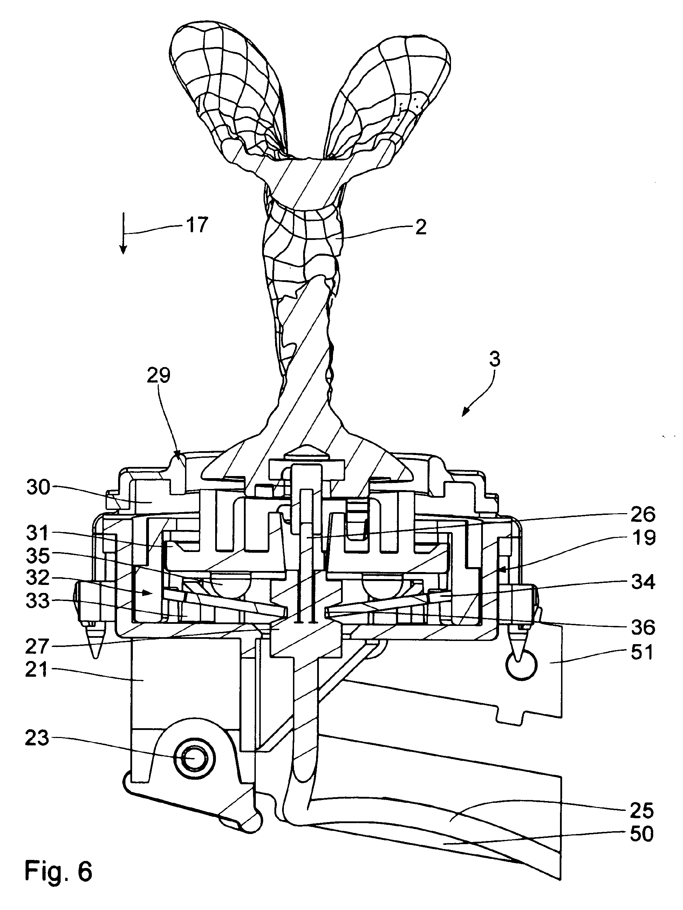

Fig. 6 zeigt die Auslöse-Einrichtung 3 in einer zweiten Auslöse-Stellung, wenn die Kühler-Figur 2 relativ zu der Auslöse-Einrichtung 3 durch eine Druckkraft in der Versenk-Richtung 17 aus ihrer Ruhe-Stellung verlagert ist. Die auf die Kühler-Figur 2 wirkende Druckkraft wird auf die Druckplatte 31, die zweiten Auslöse-Federelemente 35 und die Federplatte 34 übertragen. Dadurch, dass die Federplatte 34 auf den radial beabstandeten ersten Auslöse-Federelementen 33 gelagert ist, biegt sich die Federplatte 34 aufgrund der übertragenen Druckkraft mittig in die Versenk-Richtung 17 durch, wobei die in der Federplatten-Öffnung 36 festgelegte Bowdenzug-Buchse 27 in der Versenk-Richtung 17 relativ zu dem Bowdenzug 26 verlagert wird. Durch die Relativbewegung der Bowdenzug-Buchse 27 und des Bowdenzugs 26 wird wiederum eine Zugkraft auf den Bowdenzug 26 erzeugt, die auf die Entkopplungs-Einrichtung 5 übertragen wird.

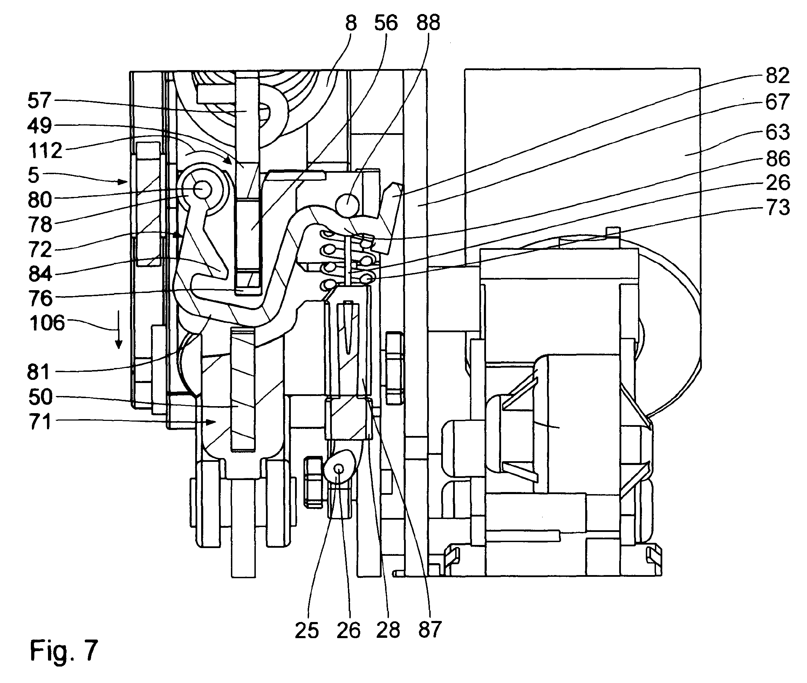

Wie in Fig. 7 gezeigt ist, bewirkt die auf die Entkopplungs-Einrichtung 5 übertragene Zugkraft eine Verlagerung der Abschluss-Kugel 88 in die Auslöse-Richtung 106, wodurch der Haken 72 in einer Haken-Schwenkrichtung 112 um die Haken-Schwenkachse 80 verschwenkt wird, wobei der Kopplungs-Vorsprung 84 aus der Halte-Öffnung 56 entfernt wird und den Halte-Hebel 49 freigibt. Fig. 7 zeigt den Haken 72 in einer entkoppelten zweiten Haken-Schwenk-Stellung. Der Halte-Hebel 49 und der Versenk-Hebel 50 sind nun entkoppelt. Die zum Entkoppeln erforderliche Auslösekraft wird durch das Verschluss-Federelement 92 eingestellt. Der zum Entkoppeln erforderliche Auslöseweg, der die Sensitivität der Auslöse-Einrichtung 3 wiedergibt, wird durch das Stellelement 28 eingestellt.

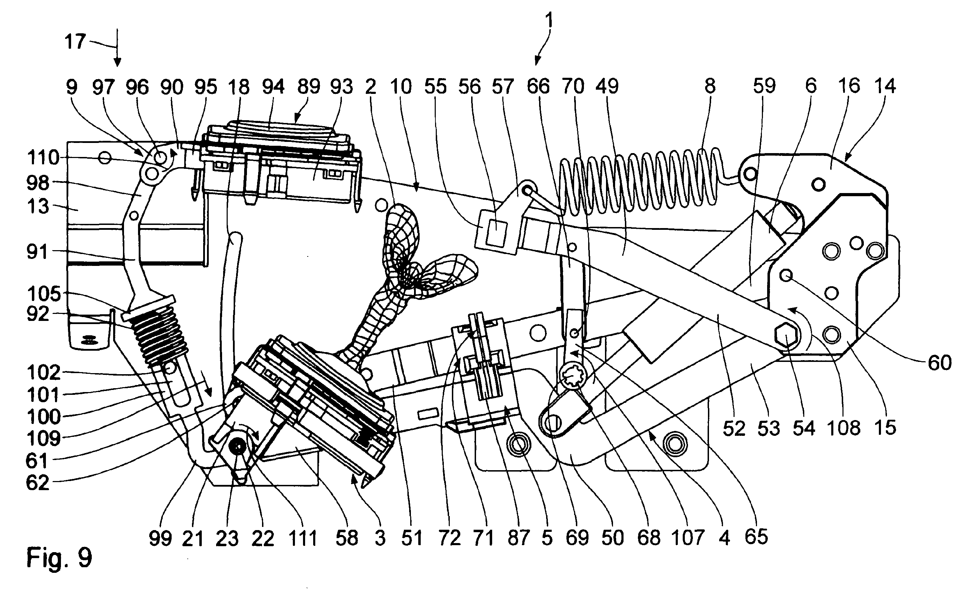

Sobald der Halte-Hebel 49 und der Versenk-Hebel 50 entkoppelt sind, entspannt sich der auf Druck vorgespannte Kraftspeicher 6, wobei der Versenk-Hebel 50 und der Führungs-Hebel 51 in der bereits beschriebenen Weise um die Gestänge-Schwenkachse 54, 60 verschwenkt werden. Der Halte-Hebel 49 verbleibt, gehalten von dem Entlastungs-Federelement 8 und dem Kopplungs-Hebel 66 in seiner Ruhe-Stellung. Dies ist in Fig. 9 gezeigt. Der Kraftspeicher 6 wirkt mit einer derartigen Druckkraft auf den Versenk-Hebel 50, dass die Kühler-Figur 2 mit einer derart großen Kraft in die Versenk-Richtung 17 verlagert wird, dass das Versenken der Kühler- Figur 2 durch eine von einer Person ausübbaren Kraft nicht verhinderbar ist. Das Versenken und Verschwenken der Auslöse-Einrichtung 3 und der damit verbundenen Kühler-Figur 2 sowie das Verschwenken der Verschluss-Vorrichtung 9 erfolgt ansonsten entsprechend zu der ersten Betriebsweise.

Durch das Versenken der Kühler-Figur 2 verlagert sich diese relativ zu der Auslöse-Einrichtung 3 wieder in die in Fig. 3 gezeigte Ruhe-Stellung. Der Bowdenzug 26 wird somit entlastet, wobei das auf Druck vorgespannte Verschluss-Federelement 92 den Haken 72 entgegen die Haken-Schwenkrichtung 112 wieder in die erste Haken-Schwenk-Stellung verlagert. Zum Ausfahren der Kühler-Figur 2 treibt der Antriebs-Motor 63 das Antriebs-Ritzel 68 in der Versenk-Drehrichtung 107 an, wobei der Halte-Hebel 49 in die Versenk-Schwenkrichtung 108 um die erste Gestänge-Schwenkachse 54 verschwenkt wird. Beim Verschwenken wird das Entlastungs-Federelement 8 auf Zug gespannt. Der Halte-Hebel 49 wird solange verschwenkt, bis das zweite freie Ende 55 auf den rampenförmig ausgebildeten Kopplungs-Vorsprung 84 trifft, wobei der Halte-Hebel 49 den Haken 72 in der Haken-Schwenkrichtung 112 verschwenkt. Kommt der Kopplungs-Vorsprung 84 in der Halte-Öffnung 56 zu liegen, so verschwenkt das Verschluss-Federelement 92 den Haken 72 wieder entgegen die Haken-Schwenkrichtung 112, so dass der Haken 72 den Halte-Hebel 49 und den Versenk-Hebel 50 miteinander koppelt. Der positionsgeregelte Antriebs-Motor 63 erkennt, dass sich die Entkopplungs-Einrichtung 5 in der Kopplungs-Stellung befindet und ändert seine Drehrichtung. Die Auslöse-Einrichtung 3 und die damit verbundene Kühler-Figur 2 werden mittels der elektrischen Antriebs-Einrichtung 7 in der bereits beschriebenen Weise ausgefahren.

## Patentansprüche

1. Versenkvorrichtung für ein Kühler-Dekorelement, mit
a. einem Versenk-Gestänge (4) zum Versenken des Kühler-Dekorelements (2),
b. einem mechanischen Kraftspeicher (6) zum rein mechanischen Betätigen des Versenk-Gestänges (4),
c. einer elektrischen Antriebs-Einrichtung (7) zum elektrischen Betätigen des Versenk-Gestänges (4),
d. einer Entkopplungs-Einrichtung (5) zum Entkoppeln des mechanischen Kraftspeichers (6) von der elektrischen Antriebs-Einrichtung (7) derart, dass das Versenk-Gestänge (4) rein mechanisch betätigbar ist, und
e. einer Auslöse-Einrichtung (3) zum Betätigen der Entkopplungs-Einrichtung (5).

2. Versenkvorrichtung nach Anspruch 1, **dadurch gekennzeichnet, dass** das Versenk-Gestänge (4) einen Halte-Hebel (49) und einen Versenk-Hebel (50) aufweist, die an einem jeweiligen ersten freien Ende (52, 53) um eine gemeinsame Gestänge-Schwenkachse (54) schwenkbar gelagert sind.

3. Versenkvorrichtung nach Anspruch 2, **dadurch gekennzeichnet, dass** die Entkopplungs-Einrichtung (5) zwischen dem Halte-Hebel (49) und dem Versenk-Hebel (50) wirkend angeordnet ist.

4. Versenkvorrichtung nach Anspruch 2 oder 3, **dadurch gekennzeichnet, dass** die Entkopplungs-Einrichtung (5) derart ausgebildet ist, dass der Halte-Hebel (49) mit dem Versenk-Hebel (50) zum elektrischen Betätigen des Versenk-Gestänges (4) koppelbar ist und der Halte-Hebel (49) von dem Versenk-Hebel (50) zum rein mechanischen Betätigen des Versenk-Gestänges (4) entkoppelbar ist.

5. Versenkvorrichtung nach einem Ansprüche 2 bis 4, **dadurch gekennzeichnet, dass** der mechanische Kraftspeicher (6) mit dem Versenk-Hebel (50) verbunden ist.

6. Versenkvorrichtung nach einem Ansprüche 2 bis 5, **dadurch gekennzeichnet, dass** die elektrische Antriebs-Einrichtung (7) mit dem Halte-Hebel (49) verbunden ist.

7. Versenkvorrichtung nach einem Ansprüche 2 bis 6, **dadurch gekennzeichnet, dass** der Halte-Hebel (49) an einem zweiten freien Ende (55) mit einem auf Zug vorgespannten Entlastungs-Federelement (8) verbunden ist.

8. Versenkvorrichtung nach einem Ansprüche 2 bis 7, **dadurch gekennzeichnet, dass** der Versenk-Hebel (50) an einem zweiten freien Ende (58) mit der Auslöse-Einrichtung (3) um eine Versenk-Schwenkachse (23) schwenkbar verbunden ist.

9. Versenkvorrichtung nach einem der Ansprüche 2 bis 8, **dadurch gekennzeichnet, dass** das Versenk-Gestänge (4) einen schwenkbar gelagerten Führungs-Hebel (51) aufweist, der derart mit der Auslöse-Einrichtung (3) verbunden ist, dass diese um die Versenk-Schwenkachse (23) geführt verschwenkbar ist.

10. Versenkvorrichtung nach einem der Ansprüche 1 bis 8, **dadurch gekennzeichnet, dass** die Auslöse-Einrichtung (3) einen in einer Bowdenzug-Hülle (25) geführten Bowdenzug (26) aufweist.

11. Versenkvorrichtung nach Anspruch 10, **dadurch gekennzeichnet, dass** die Auslöse-Einrichtung (3) eine mit der Bowdenzug-Hülle (25) verbundene Bowdenzug-Buchse (27) aufweist, die derart schwimmend gelagert ist, dass durch eine Druckkraft und/oder Zugkraft auf die Bowdenzug-Buchse (27) eine Relativbewegung zwischen der Bowdenzug-Hülle (25) und dem Bowdenzug (26) erzeugbar ist.

12. Versenkvorrichtung nach einem der Ansprüche 1 bis 11, **dadurch gekennzeichnet, dass** die Entkopplungs-Einrichtung (5) einen um eine Haken-Schwenkachse (80) verschwenkbaren Haken (72) aufweist, wobei der Haken (72) derart ausgebildet ist, dass dieser mittels des Bowdenzuges (26) um die Haken-Schwenkachse (80) verschwenkbar ist.

13. Versenkvorrichtung nach Anspruch 12, **dadurch gekennzeichnet, dass** zwischen dem Haken (72) und der Bowdenzug-Hülle (25) ein auf Druck vorgespanntes Entkopplungs-Federelement (73) angeordnet ist.

14. Versenkvorrichtung nach einem der Ansprüche 1 bis 13, **dadurch gekennzeichnet, dass** eine Verschluss-Einrichtung (9) zum Verschließen einer Kühler-Öffnung (11) vorgesehen ist, wobei die Verschluss-Einrichtung (9) einen um eine Verschluss-Schwenkachse (96) verschwenkbaren Verschluss-Deckel (89) aufweist.

15. Versenkvorrichtung nach Anspruch 14, **dadurch gekennzeichnet, dass** die Verschluss-Einrichtung (9) einen mit dem Verschluss-Deckel (89) verbundenen Verschluss-Hebel (91) aufweist, der derart ausgebildet ist, dass dieser mittels der Auslöse-Einrichtung (3) betätigbar ist.
